# EUROPEAN PATENT APPLICATION

(11) **EP 1 650 386 A2**
(43) Date of publication of application: **26.04.2006**
(21) Application number: 05256453.1
(22) Date of filing: 18.10.2005
(51) Int. Cl.: E05F 1/10

(54) **Springs**

(30) Priority: 19.10.2004 GB 0423195
(71) Applicant: Cash Bases Limited, New Haven, East Sussex BN9 0LA (GB)
(72) Inventor: Pullen, Matthew, Lewes East Sussex BN7 2QF (GB)
(74) Representative: Leckey, David Herbert

(57) **Abstract**

A coil tension spring 4 tapers in external diameter towards its ends 14. In a relaxed state, adjacent turns of the spring 4 are in contact with each other at a location away from the ends 14 of the spring 4. The endmost turns 18 of the spring 4 are spaced from their respective adjacent turns, and project to form tangs 20.. Connectors 6 are received in the ends 14 of the springs 4 for attachment to, for example, a lid raising mechanism. The tangs 20 and spaced end turns 18 facilitate insertion of the connectors 6 into the spring 4.

## Description

The present invention relates to springs and in particular coil tension springs.

In the art of cash drawers it is common to use tension springs to apply a force to a lid lifting mechanism. To this end, a tension spring is anchored between a fixed location and a location on the lid mechanism through a suitable connector. One common form of connector is a flat tab of sheet material having an eye at one end, and shoulders at the other end, the shoulders engaging inside the spring to retain the connector in position. The spring tapers towards its end in order to retain the tab shoulders.

A problem with this arrangement is the insertion of the connector tab into the spring. A user has to force open the endmost turn of the spring using a tool, , wedge a tab shoulder into the gap and rotate the tab. The tab shoulders then travel up between the turns of the spring until they reach a sufficiently large diameter at which they disengage from the spring turns and are retained within the spring. The initial forcing of the spring is difficult and time consuming, and the present invention seeks to overcome that problem.

From a first aspect, therefore, the present invention provides a coil tension spring which tapers in external diameter towards its end, wherein, in a relaxed state, adjacent turns of the spring are in contact with each other at a location away from the end of the spring, but wherein at least the endmost part of the endmost turn of at least one end of the spring is spaced from its adjacent turn.

In this way, the end of the spring is opened up to facilitate insertion of the connector, the operative no longer needing to force open the turns of the spring to do so. This expedites the operation quite considerably.

Preferably at least 50% of the endmost turn, and most preferably substantially the entire endmost turn is spaced from the adjacent turn.

To further facilitate insertion of the tab, the endmost turn may be extended out of the circumferential direction, for example in a tangential direction. This forms a tang against which an operative may initially locate the tab shoulder.

Preferably, both ends of the spring are formed in accordance with the invention, to receive connectors at both ends thereof.

The invention also extends to a spring in accordance with the invention in combination with a connector or connectors located in its end or ends

The connector may be of any form which will allow it to be retained in the tapering end of the spring, but preferably it comprises retaining means at one end and connecting means at the other end.

The retaining means may comprise shoulders which will engage with the internal surface of the spring. Preferably, the shoulders are triangular, whereby one end of the connector tab may have a dovetail like appearance.

The connector is preferably flat and most preferably made from sheet material.

The connecting means may be a hook or the like, but preferably it is an eye.

A preferred embodiment of the invention will now be described by way of example only, with reference to the accompanying drawings in which:
Figure 1 shows a spring/connector assembly in accordance with the invention;
Figure 2 shows a top view of the assembly of Figure 1;
Figure 3 shows an end view of the assembly of Figure 1; and
Figure 4 shows the connector of the assembly of Figure 1.

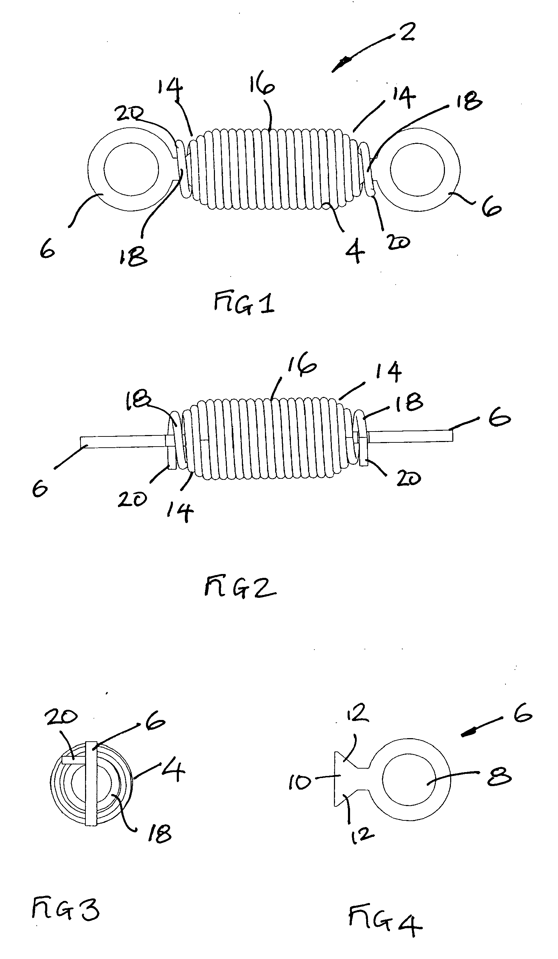

With reference to the Figures, a biasing assembly 2 for a lid opening mechanism for a cash drawer comprises a coiled tension spring 4 and two connectors 6 retained at opposite ends of the spring 4.

The connectors 6 are formed from a sheet material and, as can be seen in Figure 4, each has an eye 8 for engagement with a part of the mechanism, and a dovetail -like retaining part 10 formed with a pair of triangular shoulders 12, for engagement within the spring 4.

The tension spring 4 has tapering end portions 14 and a central, constant diameter central portion 16. In the central region 16 of the spring 4 and over the inboard ends of the end portions 14, adjacent turns of the spring 4 abut each other. However, at the outboard ends of the end portions 14, each endmost turn 18 of the spring is spaced from its adjacent turn such that a gap is created between them. In the embodiment shown, the entire endmost turn 18 is so spaced from its neighbour. Moreover, the endmost turn 18 is extended in a tangential direction to create a projecting tang 20.

To assemble a connector 6 to the spring 4, an operative merely needs to engages the sloping shoulder 12 of the connector 6 behind the projecting tang 20 and then rotate the connector 6. This screws the shoulders 12 of the dovetail portion 10 of the connector 6 in between the turns of the spring 4. The spacing of the endmost turn 18 from its adjacent turn facilitates this engagement. Rotation continues until such time as the dovetail portion 10 winds off the turns into the interior of the spring, to be trapped inside the tapering portion 14 of the spring 4.

It will be appreciated that the above is a description of a preferred embodiment of the invention only, and that variations may be made to the embodiment without departing from the scope of the invention. For example, the connector need not be flat and the retaining portion could be, for example, frustoconical. Also, the invention will undoubtedly have wider application than in lid opening mechanisms.

## Claims

1. A coil tension spring which tapers in external diameter towards its end, wherein, in a relaxed state, adjacent turns of the spring are in contact with each other at a location away from the end of the spring, but wherein at least an endmost part of the endmost turn of at least one end of the spring is spaced from its adjacent turn.

2. A spring as claimed in claim 1 wherein at least 50% of the endmost turn is spaced from the adjacent turn.

3. A spring as claimed in claim 1 wherein substantially the entire endmost turn is spaced from the adjacent turn.

4. A spring as claimed in any preceding claim wherein the endmost turn is extended out of the circumferential direction.

5. A spring as claimed in claim 4 wherein the turn is extended in a tangential direction.

6. A spring as claimed in any preceding claim wherein the endmost part of the endmost turn of both ends of the spring are spaced from their respective adjacent turns.

7. A spring as claimed in any preceding claim in combination with a connector located in said at least one end.

8. A combination as claimed in claim 7 wherein the connector is flat.

9. A combination as claimed in claim 8 wherein the connector is made from sheet material.

10. A combination as claimed in claim 7, 8 or 9 wherein the connector has retaining means at one end and connecting means at the other end.

11. A combination as claimed in claim 10 wherein the retaining means comprises shoulders formed on the connector which will engage with the internal surface of the spring.

12. A combination as claimed in claim 11 wherein the shoulders are triangular.

13. A combination as claimed in any of claims 8 to 12 wherein the connector comprises an eye.
